# EUROPEAN PATENT APPLICATION

(11) **EP 3 326 846 A1**
(43) Date of publication of application: **30.05.2018**
(21) Application number: 17166080.6
(22) Date of filing: 11.04.2017
(51) Int. Cl.: B60G 21/055

(54) **STABILIZER BAR BUSHING ASSEMBLY HAVING BRACKETS INTEGRATED WITH RUBBERS AND STABILIZER BAR ASSEMBLY USING THE SAME**

(30) Priority: 24.11.2016 KR 20160157178
(71) Applicant: Semyung Industrial Co., Ltd., Gyeongsan-si, Gyeongsangbuk-do 38471 (KR)
(72) Inventor: OH, Yu In, 42245 Daegu (KR)
(74) Representative: Gritschneder, Sebastian

(57) **Abstract**

A stabilizer bar bushing assembly is provided, in which even though it is exposed to heat of high temperature for a long time period the bracket is not dislocated from the rubber because the bracket is attached to the rubber integrally. The stabilizer bar bushing assembly comprises: an upper body including an upper rubber formed with a first concave groove and an upper bracket enclosing an outer surface of the upper rubber and bonded integrally to the upper rubber; a lower body including a lower rubber formed with a second concave groove and a lower bracket enclosing an outer circumferential surface of the lower rubber and bonded integrally to the lower rubber; and a coupling means for coupling the upper bracket and the lower bracket together in a state of installing the upper body and the lower body on the stabilizer bar.

## Description

### [Field of Technology]

The invention relates to a stabilizer bar bushing assembly and an improvement of stabilizer bar assembly, more specifically to the stabilizer bar bushing assembly and an improvement of stabilizer bar assembly, which is used to control the roll motion of a car in motion, support a stabilizer bar of the car, and maintain the position of the stabilizer bar in the lateral direction of the car.

### [Background of Invention]

In general, a stabilizer bar is used to control the roll motion of the body of car, which is generated at the time of vibration of car, and performs functions of reducing vibration generated in driving the car, subduing roll motion of the car, and maintaining right-and-left balance of the car body, so as to improve the driving stability.

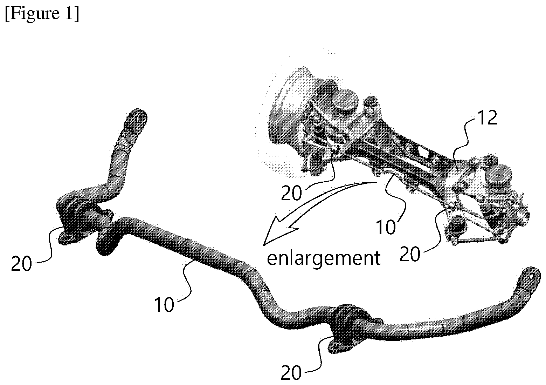

Fig. 1 is a diagram for describing a structure of installation of a conventional stabilizer bar.

Referring to Fig. 1, a stabilizer bar 10 is fixed to a vehicle frame such as a sub-frame 12 and the like through a bushing assembly 20, and both ends thereof are connected to the right and left struts or lower arm portions through control links absorbing floating motion. Such a stabilizer bar 10 has a span corresponding to the entire width of the vehicle in general, and each of the front and rear axles is disposed with one of those.

The bushing assembly 20 is fixed to the sub-frame 12 of the vehicle in a state of enclosing and holding a partial portion of the stabilizer bar 10. The portion enclosing the stabilizer bar 10 is made with rubber having elasticity in a cylindrical shape, and it has a shape of one side surface opened sideways, so as to insert the stabilizer bar in the cylindrical rubber. This cylindrical rubber is fixed to a sub-frame and the like through a metal bracket. Such a conventional bushing assembly 20 is made with one cylindrical rubber and one bracket for fixing it.

In a vehicle using such a conventional bushing assembly 20, when exposed to heat of high temperature generated from the engine room for a long time, deforming of rubber and weakening of compressive force take place, and thus the bushing assembly 20 cannot resist properly to the stabilizer bar's being pushed in an axial direction, so that the phenomenon of the stabilizer bar's being pushed in the axial direction.

And, since the rubber of conventional bushing assembly is installed on the stabilizer bar by spreading the opened portion of the rubber, the installation is tricky and an internal metal plate so-called "rate plate" inserted through the inside of rubber is deformed, resulting in a problem of performance lowered in the process of installation.

Also, since the stabilizer bar fixed in the bushing assembly is under a large torsion stress while driving vehicle, noise due to slipping between the stabilizer bar and the rubber and between the rubber and the bracket is made and the supporting position of the stabilizer bar is changed, resulting in a problem of lowering the performance of the stabilizer bar.

For solving such a problem partially, Korean patent application publication No. 10-2011-0132744 (Title of Invention: Mount Bush of Stabilizer Bar for Vehicle, Inventor: Sung Bae JANG, et al.) was suggested. That has a structure of injecting an insert member formed with circular protrusions at the fixing portion of the stabilizer bar, engaging sliding bearing with outer circumferential surface of the insert member, installing rubber at the outer circumferential side, and fixing a bracket enclosing the rubber to the sub-frame (car body).

The mount bush of Sung Bae JANG, et al. provides effects of preventing stabilizer bar from dislocating, minimizing friction, and preventing noise from being generated, but there are problems that it is hard to make due to its complicated manufacturing processes, its large number of parts being needed, and its taking lots of time and manpower for assembling the parts.

### [Summery of Invention]

### [Problems to Solve]

An object of the invention is to provide a stabilizer bar bushing assembly that solves a problem of noise-generation due to slipping of inner surface of bracket against outer surface of rubber, which has been known as a problem of the conventional integrated bushing assembly in which rubber enclosing the stabilizer bar is bonded to the outer circumferential surface of the stabilizer bar.

Another object of the invention is to provide a stabilizer bar bushing assembly that prevents noise between the rubber and the top and bottom brackets, improves assembling a lot, and is easy to make.

Still another object of the invention is to provide a stabilizer bar bushing assembly that can be installed easily with the bracket on the outer circumferential surface of the stabilizer bar in advance even before fixing the stabilizer bar to the car body with bolt and the like.

Still another object of the invention is to provide a stabilizer bar bushing assembly that the performance is not degraded in the process of installation and the installation is easy.

Still another object of the invention is to provide a stabilizer bar bushing assembly that does not generate friction noise by rotating along with stabilizer bar without slipping with respect to the stabilizer bar due to compressing force between a top side rubber and a bottom side rubber.

Still another object of the invention is to provide a stabilizer bar bushing assembly that achieves the above objects and prevents the stabilizer bar from being slipped with respect to the bushing assembly in an axial direction.

Still another object of the invention is to provide a stabilizer bar assembly that has the stabilizer bar bushing assembly in an integral form according to the invention.

### [Solutions to Problems]

A stabilizer bar bushing assembly according to the invention for supporting a stabilizer bar at the frame of vehicle comprises: an upper body including an upper rubber formed with a first concave groove for enclosing a top side portion of outer circumferential surface of the stabilizer bar and an upper bracket enclosing an outer surface of the upper rubber opposite to the first concave groove and bonded integrally to an outer surface of the upper rubber; a lower body including a lower rubber formed with a second concave groove for enclosing a bottom side portion of outer circumferential surface of the stabilizer bar and a lower bracket enclosing an outer circumferential surface of the lower rubber opposite to the second concave groove and bonded integrally to an outer surface of the lower rubber; and a coupling means for coupling the upper bracket and the lower bracket together in a state of installing the upper body and the lower body in the stabilizer bar.

Preferably, a rate plate for increasing a rigidity of the upper rubber and the lower rubber is inserted in the upper rubber and the lower rubber.

The upper bracket may comprise an upper bracket body enclosing an outer surface of the upper rubber and formed with groove along an inner circumferential surface and an upper flange portion protruding toward both sides from both lower portions of the upper bracket body and formed with an engaging hole, and the lower bracket may comprise a lower bracket body enclosing an outer surface of the lower rubber and formed with groove along an inner circumferential surface and a lower flange portion protruding toward both sides correspondingly to the upper flange and formed with an engaging hole, and
the coupling means may include a rivet portion, which protrudes at the engaging hole of one of the upper flange and the lower flange toward the engaging hole of the other flange, is inserted into the engaging hole formed in the other flange, and is fixed by deforming or forced inserting.

The upper bracket may comprise an upper bracket body enclosing an outer surface of the upper rubber and formed with groove along an inner circumferential surface and an upper flange portion protruding toward both sides from both lower portions of the upper bracket body and formed with an engaging hole, and the lower bracket may comprise a lower bracket body enclosing an outer surface of the lower rubber and formed with groove along an inner circumferential surface and a lower flange portion protruding toward both sides correspondingly to the upper flange and formed with an engaging hole, and
the coupling means may include a latching protrusion formed in one of the upper bracket and the lower bracket and a latching step formed in the other flange.

The upper bracket may comprise an upper bracket body enclosing an outer surface of the upper rubber and formed with groove along an inner circumferential surface and an upper flange portion protruding toward both sides from both lower portions of the upper bracket body and formed with an engaging hole, and the lower bracket may comprise a lower bracket body enclosing an outer surface of the lower rubber and formed with groove along an inner circumferential surface and a lower flange portion protruding toward both sides correspondingly to the upper flange and formed with an engaging hole, and
the coupling means may include facing surfaces of the upper bracket and the lower bracket, which are synthetic resin that are attachable together through thermosetting.

In a state without external force before coupling through the coupling means, the facing surfaces of cross-sections of the upper rubber and the lower rubber are formed preferably so that the interval gets wider and wider as going from inner portion to outer portion.

The coupling means may include screw members for fixing the upper bracket and the lower bracket to the frame through the engaging holes.

Preferably, at least a pair of stabilizer bar bushing assemblies are installed on the outer circumferential surface of the stabilizer bar with an interval, and an inner circumferential surface of the first concave groove and an inner circumferential surface of the second concave groove provided in the stabilizer bar bushing assembly are attached to an outer circumferential surface of the stabilizer bar integrally.

### [Effects of Invention]

According to the invention, the bracket and the rubber are bonded together integrally, and therefore even though it is exposed to heat of high temperature generated from the engine room for a long time period, the bracket is not dislocated from the rubber, and thus the stabilizer bar does not change its location in the lateral direction of the car.

According to the invention, since the upper body and the lower body are engaged with each other through the coupling means such as rivet and the like installed in the upper and lower brackets in a state of installing the upper and lower bodies on the outer circumferential surface of the stabilizer bar, it can be attached to the stabilizer bar in advance before being installed to the vehicle frame through bolts, etc.

According to the invention, since no slip takes place between rubber and bracket, noise by the slip between rubber and bracket is prevented fundamentally.

According to the invention, since the separate upper and lower bodies are attached to the top portion and the bottom portion of the stabilizer bar respectively, it is easy to assemble.

According to the invention, since the separate upper and lower bodies are attached to the top portion and the bottom portion of the stabilizer bar respectively, damages in the parts can be avoided from spreading an opening of bushing rubber for engaging to the stabilizer bar.

### [Brief Description of Drawings]

Fig. 1 is a diagram for describing how to install a regular stabilizer bar,
Fig. 2 is a perspective view of a stabilizer bar bushing assembly according to the invention,
Fig. 3 is a front view of the stabilizer bar bushing assembly of Fig. 2,
Fig. 4 is an exploded perspective view of the stabilizer bar bushing assembly of Fig. 2,
Fig. 5 is a cross-sectional view along I-I in Fig. 3,
Fig. 6 is a diagram for describing procedures of manufacturing a stabilizer bar bushing assembly according to the invention and installing it in stabilizer bar,
Fig. 7 is an exploded perspective view showing another example of a stabilizer bar bushing assembly according to the invention,
Fig. 8 is a perspective view showing a modification of a lower body of a stabilizer bar bushing assembly according to the invention,
Fig. 9 is an exploded perspective view of still another example of a stabilizer bar bushing assembly according to the invention,
Fig. 10 is an exploded perspective view of still another embodiment of a stabilizer bar bushing assembly according to the invention,
Fig. 11 is a cross-sectional view of the bushing assembly in an assembled state in Fig. 10,
Fig. 12 is a partially enlarged cross-sectional view for describing an example of a coupling means of a bushing assembly according to the invention,
Fig. 13 is a diagram for describing another example of a coupling means of a bushing assembly according to the invention,
Fig. 14 and Fig. 15 are diagrams for showing still another examples of the coupling means of a bushing assembly according to the invention, and
Fig. 16 is a perspective view of an example of stabilizer bar assembly according to the invention.

### [Detailed Description of Embodiments of Invention]

Below, referring to the attached drawings, the preferred embodiments of the invention are going to be described in detail.

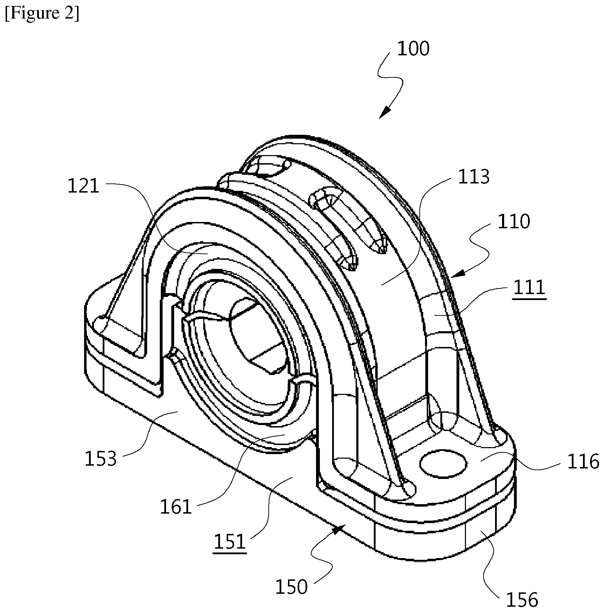

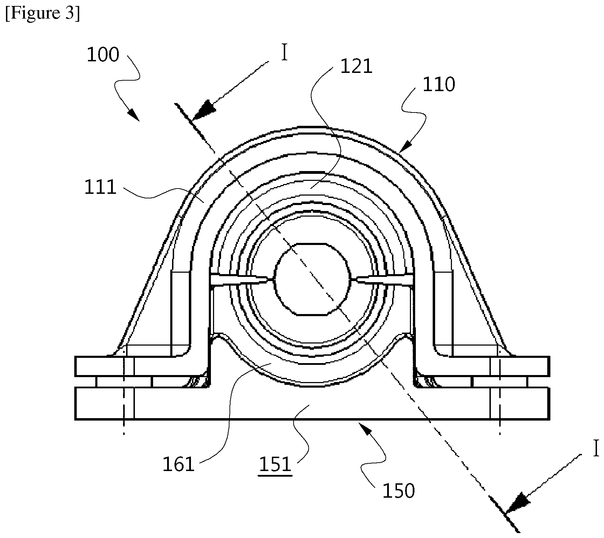

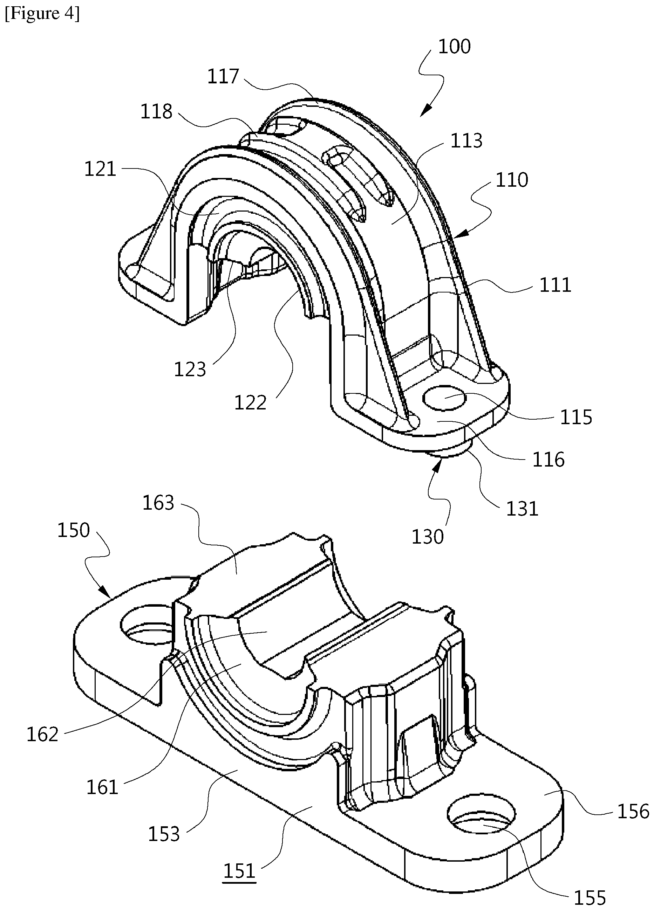

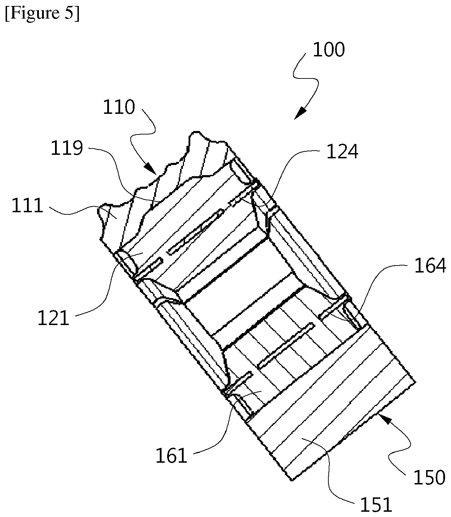

Fig. 2 is a perspective view of a stabilizer bar bushing assembly according to the invention, Fig. 3 is a front view of the stabilizer bar bushing assembly of Fig. 2, Fig. 4 is an exploded perspective view of the stabilizer bar bushing assembly of Fig. 2, and Fig. 5 is a cross-sectional view along I-I in Fig. 3.

Referring to Figs. 2 to 5, a stabilizer bar bushing assembly 100 according to the invention includes an upper body 110 and a lower body 150.

The upper body 110 is formed by gluing an upper bracket 111 and an upper rubber 121 integrally, which is one of the features of the invention. More specifically, the upper rubber 121 is provided with a first concave groove 122 for enclosing a top side portion of outer circumferential surface of the stabilizer bar in the bottom surface. Preferably the upper rubber 121 has a shape of substantially half cylinder. For the upper rubber 121, elastomer is appropriate, but other rubbers can be used. Rubber in the invention comprises elastomer, natural rubber, and synthetic rubber. A cross-sectional portion (bottom surface) of the upper rubber 121 is formed with a declined surface 123 that gets higher and higher as going from an inner portion to an outer portion. Inside the upper rubber 121 is inserted a rate plate 124 for increasing the rigidity of the upper rubber 121. The rate plate 124 performs a role of controlling the spring rate of the upper rubber 121, and it may be called an internal metal in a regular case of using a metal plate. Sometimes, for the rate plate 124, other material including synthetic resin plate and the like instead of metal may be used.

The upper bracket 111 encloses an external surface of the upper rubber 121 opposite to the first concave groove 122 and is bonded to the outer surface of the upper rubber 121 integrally. Preferably, the upper bracket 111 comprises an upper bracket body 113 enclosing the external surface of the upper rubber 121 and an upper flange portion 116 protruding outwards from lower end portion of both sides of the upper bracket body 113 and formed with engaging holes 115.
On the outer circumferential surface of the upper bracket body 113 are formed reinforcing edges 117 protruding upwards along both front and rear edges, and at a summit portion of top surface between the two reinforcing edges 117 is formed a reinforcing portion 118 protruding upwards. The reinforcing portion 118 prevents the summit portion of the upper bracket body 113 from being damaged due to stress concentration. Along an inner circumferential surface of the upper bracket body 113 is formed a groove 119 as shown in Fig. 5. The groove 119 is for preventing the upper rubber 121 surely from being dislocated in a front-rear direction or in a length direction (axial direction) of stabilizer bar (in the lateral direction of the car). The groove 119 does not have to be installed in the stabilizer bar bushing assembly 100 according to the invention. Sometimes, the stabilizer bar bushing assembly 100 according to the invention can be made without such a groove 119.

Preferably, in the upper flange portion 116 is formed a rivet portion 131 of a cylindrical shape extending downwards from an edge of the engaging hole 115. The rivet portion 131 is inserted into the engaging hole 155 formed in the lower flange 156 of the lower bracket 151 provided in the lower body 150 that are going to be described below and deformed by caulking and the like, or inserted by force and fixed to the lower flange 156, so as to fix the upper bracket 111 and the lower bracket 151 integrally, and as a type of the coupling means 130 for coupling the upper bracket 111 and the lower bracket 151 together, it can be replaced by other types of coupling means. The rivet portion 131 may be used along with other types of coupling means, of course.

The upper bracket 111 as in the above is preferably made with nonferrous metal of low weight considering weight, strength, rigidity etc., but one made with other metals or synthetic resins can be used.

That is, the stabilizer bar bushing assembly 100 according to the invention includes the coupling means 130 for coupling the upper bracket 111 and the lower bracket 151 together in a state of installing the upper body 110 and the lower body 150 in the stabilizer bar. The coupling means 130 may be formed in various ways, which is going to be described in detail later.

The lower body 150 is formed by bonding the lower bracket 151 and the lower rubber 161 integrally, which is a feature of the invention. More specifically, the lower rubber 161 is provided with a second concave groove 162 for enclosing the bottom side portion of outer circumferential surface of the stabilizer bar at the top surface thereof. Preferably, the second concave groove 162 also has a shape of substantially half cylinder. Such a lower rubber 161 is made of the same rubber as the upper rubber 121 described in the above. The cross-sectional portion of the lower rubber 161 is formed with a declined surface 163 that declines further and further as going from the inner side surface to the outer side surface. Thereby if an external force is not applied, in a state of being disposed so as to face each other as shown in Fig. 3, the facing cross-sectional portions' surfaces of the upper rubber 121 and the lower rubber 161 increase their interval as going from the inner portion to the outer portion. In the lower rubber 161 is inserted a rate plate 164 for increasing the rigidity of the lower rubber 161.

The lower bracket 151 encloses the exterior surface of the lower rubber 161 opposite to the second concave groove 162 and is bonded to the exterior surface of the lower rubber 161 integrally. Preferably, the lower bracket 151 includes a lower bracket body 153 enclosing the exterior surface of the lower rubber 161 and the lower flange 156 protruding outwards from the bottom edge portion of the both sides of the lower bracket body 153 and formed with engaging holes 155. The side central portion of a part of the lower rubber 161 protrudes outwards from the side surface of the lower bracket body 153, so as to be inserted into a groove formed along the inner circumferential surface of the upper bracket 111.

The lower bracket 151 as in the above may be made with metal or synthetic resin. For the synthetic resin, plastic of high strength such as engineering plastic and the like is appropriate.

Sometimes, a rivet portion may be installed so as to protrude upwards from an edge of the engaging hole 155 of the lower flange 156 of the lower bracket 151 instead of the upper flange portion 116 of the upper bracket 111, so as to be inserted to the engaging hole 115 formed in the upper flange portion 116.

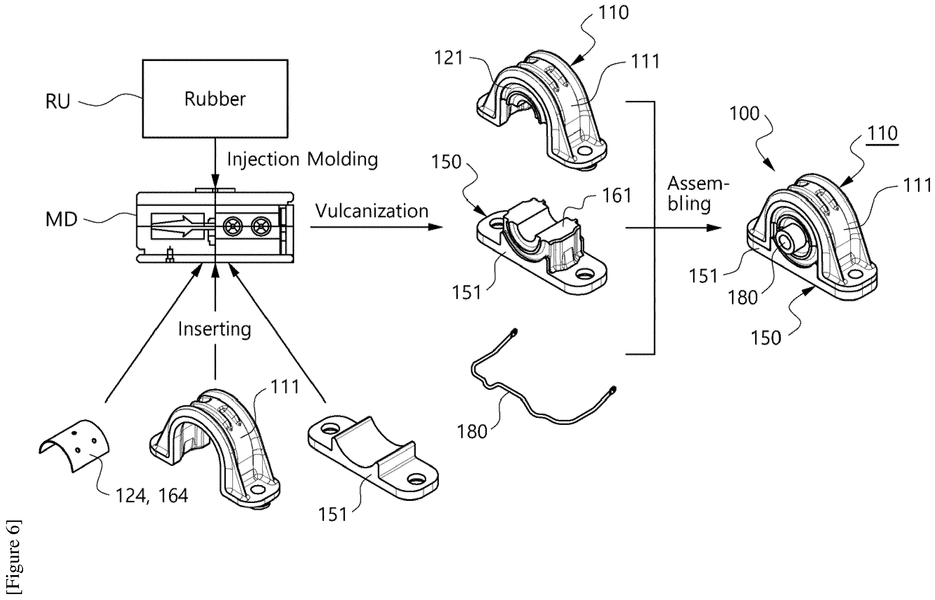

Fig. 6 is a diagram for describing procedures of manufacturing a stabilizer bar bushing assembly according to the invention and installing it in stabilizer bar. It is going to be described referring to Figs. 2 to 5 together.

Pre-prepared upper bracket 111, lower bracket 151, and rate plate 124 coated with adhesive for rubber are installed in a mold MD, through insert injection by pressure-injecting heated rubber RU in the mold MD are made the upper body 110 with the upper rubber 121 bonded integrally to the upper bracket 111 and the lower body 150 with the lower rubber 161 bonded integrally to the lower bracket 151. The rate plate (124, 164) is installed as each of them is inserted in the upper rubber 121 and the lower rubber 161 through the insert injection.

After the vulcanization process to the upper rubber 121 and the lower rubber 161, each of which being attached integrally to the upper bracket 111 and the lower bracket 151, a pair of lower bodies 150 are disposed with an interval, and the stabilizer bar 180 is put on the second concave groove 162 of the lower rubber 161. Then the upper bodies 110 are disposed on the two lower bodies respectively by having the first concave groove 122 of the upper rubber 121 enclose the top side exterior circumferential surface of the stabilizer bar 180.

Then, the upper bracket 111 is pressurized toward the lower bracket 151 by a predetermined pressure, so that two facing cross-sectional portions of the upper rubber 121 and the lower rubber 161 are pressed on each other and pressurized. At that point, a gap between the facing cross-sectional portions disappears. Then the rivet portion 131 installed in the upper flange portion 116 is inserted maximally in the engaging hole 155 formed in the lower flange 156. In this state, the rivet portion 131 is caulked, so that the upper bracket 111 and the lower bracket 151 maintain the fixed state. Then, the stabilizer bar bushing assembly 100 according to the invention can be installed integrally in the stabilizer bar 180, and it is possible to make a stabilizer bar assembly according to the invention.

That is, the stabilizer bar bushing assembly 100 according to the invention is easy to install on the stabilizer bar 180, and can be installed easily on the exterior circumferential surface of the stabilizer bar 180 in advance before being fixed to the vehicle frame.

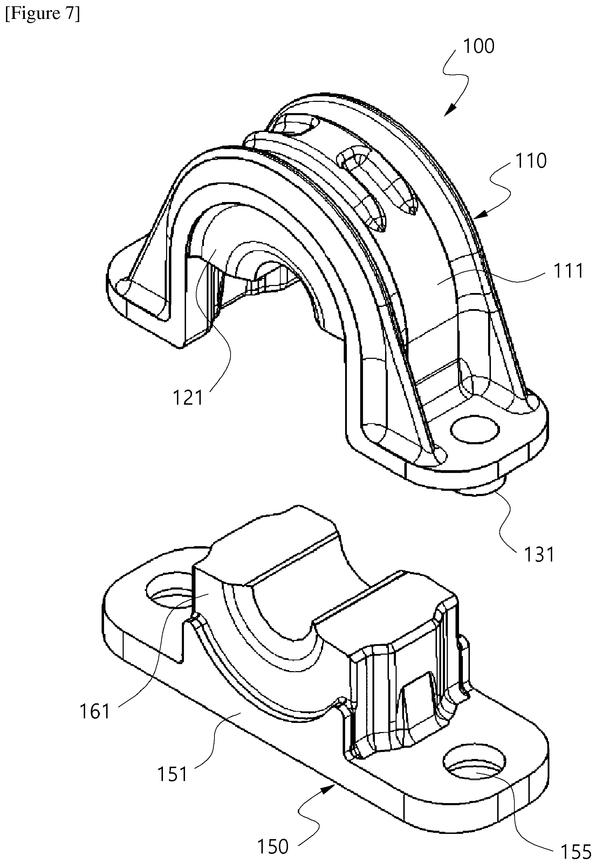

Fig. 7 is an exploded perspective view showing another example of a stabilizer bar bushing assembly according to the invention.

Sometimes a stabilizer bar bushing assembly 100 according to the invention can be made even without inserting a rate plate in the upper rubber 121 and the lower rubber 161. The rest is same as described in Figs. 2 to 6.

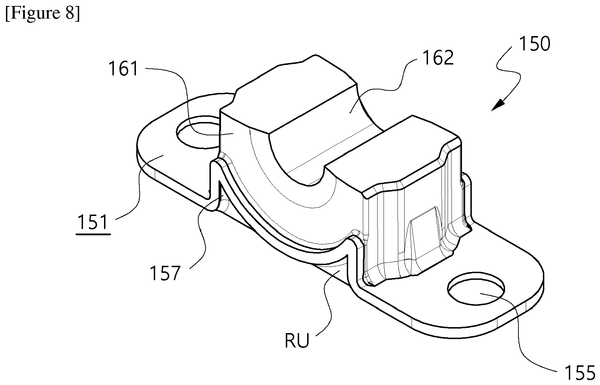

Fig. 8 is a perspective view showing a modification of a lower body of a stabilizer bar bushing assembly according to the invention.

Sometimes the lower bracket 151 can be made thinner than that in the previous embodiment with metal and the like having iron of high strength, but rubber filling grooves 157 are formed on the bottom surface, so that rubber RU is filled in the rubber filling grooves 157 during the insert injection. Then, the weight of the lower bracket 151 can be reduced.

The rest is same as described through Figs. 2 to 5.

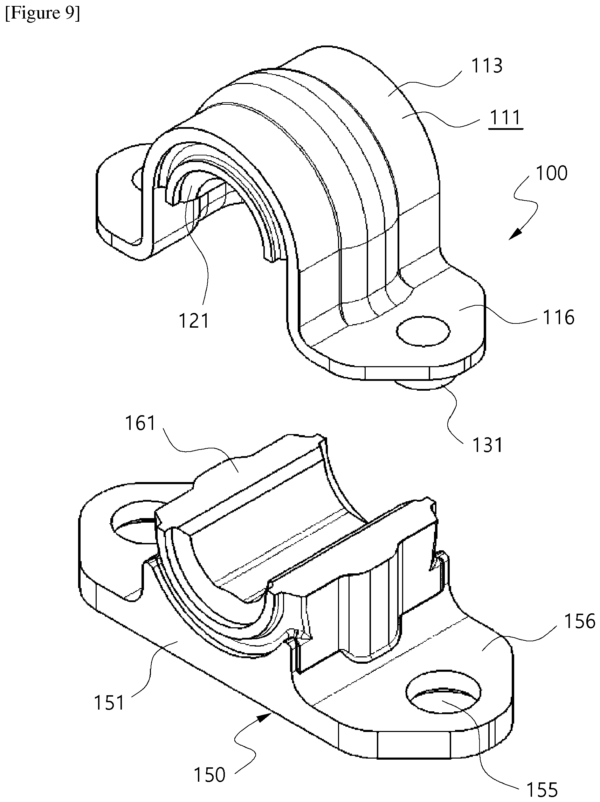

Fig. 9 is an exploded perspective view of still another example of a stabilizer bar bushing assembly according to the invention.

Sometimes the upper bracket 111 can be made thinner than the previous embodiment. In such a case, the upper bracket 111 can be made by pressing a band member. Such an upper bracket 111 is also formed with a groove along the inner circumferential surface for preventing dislocation of the upper rubber 121 further. In other embodiments of the invention, that groove can be omitted, of course. Let alone the difference in the outlook of the upper bracket 111 and the shape of a portion of the upper rubber 121 attached to or contacted with the inner surface of the upper bracket 111, the rest can be same as described through Figs. 2 to 5.

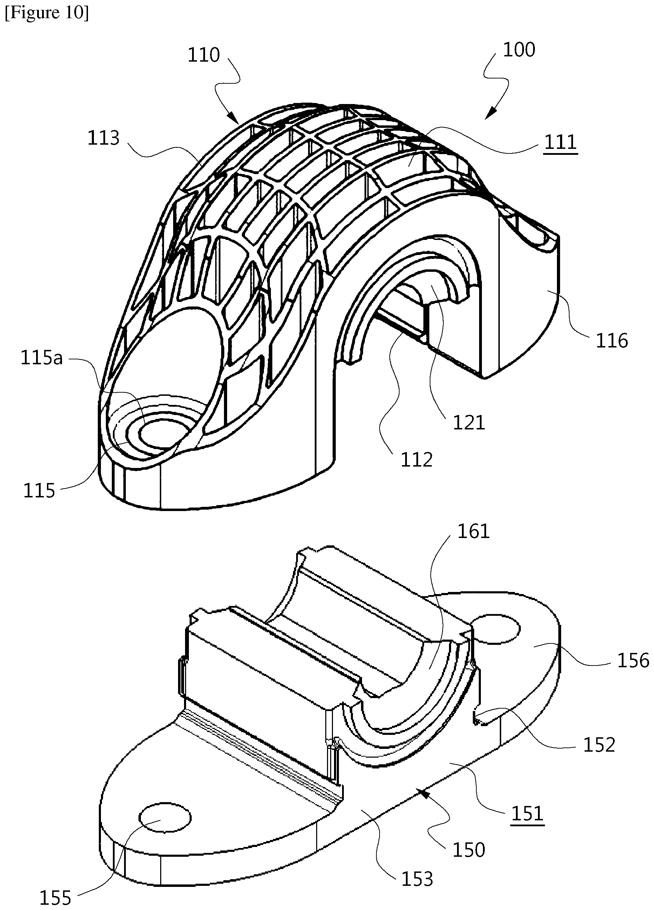

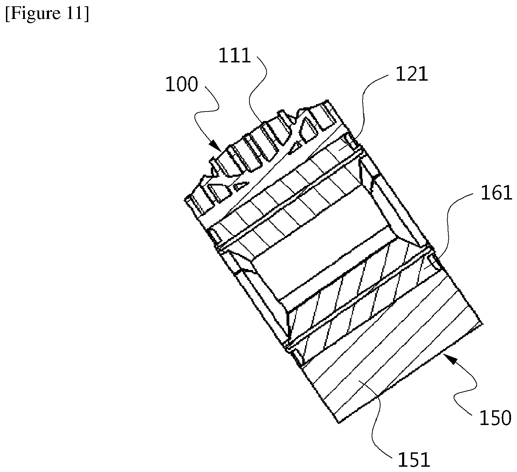

Fig. 10 is an exploded perspective view of still another embodiment of a stabilizer bar bushing assembly according to the invention, and Fig. 11 is a cross-sectional view of the bushing assembly in an assembled state in Fig. 10.

Sometimes at a lower end portion in the upper bracket body 113 of the upper bracket 111 is formed the latching protrusion 112, and around a lower end portion of outside of the lower bracket body 153 of the lower bracket 151 is formed the latching step 152, so that the upper body 110 and the lower body 150 engage with each other through the latching protrusion 112 and the latching step 152. Sometimes, the latching protrusion 112 may be formed so as to protrude below the bottom surface of the upper bracket 111, form a hole at a corresponding position of the lower bracket 151, and form the latching step 152 at a bottom side portion of the hole.

In the case of this embodiment, what is made of synthetic resin is good for the upper bracket 111. In such a case, preferably the engaging hole 115 is formed larger than the previous embodiment and an insert pipe 115a made of metal is inserted inside, so that when it is fixed to the vehicle frame such as a sub frame through a screw member such as bolt and the like, it can be prevented to apply too much force to the upper bracket 111 and the lower bracket 151 and to break and disconnect the upper and lower brackets 111, 151.

The lower bracket 151 may be made with metal or synthetic resin. The rest is same as described in Figs. 2 to 5.

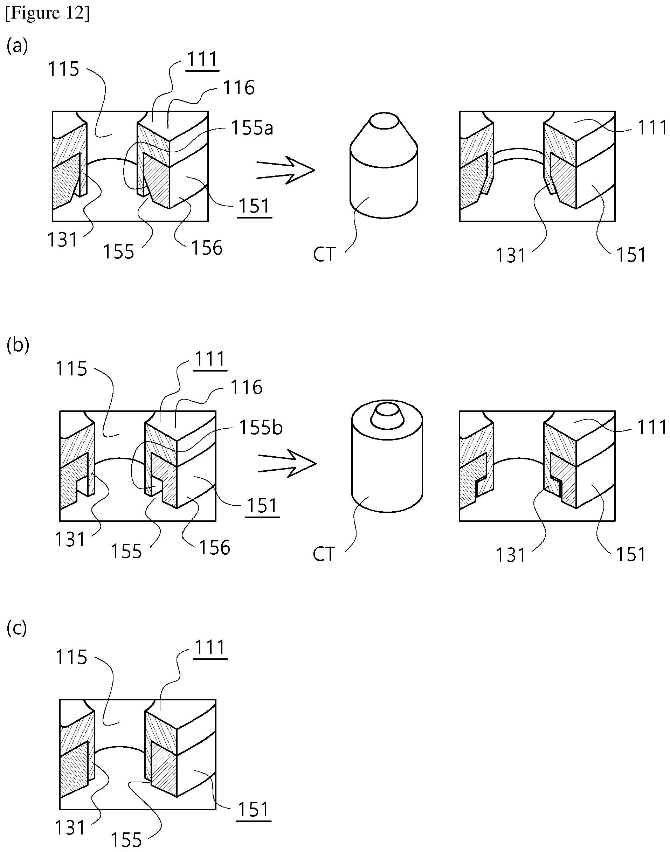

Fig. 12 is a partially enlarged cross-sectional view for describing an example of a coupling means of a bushing assembly according to the invention.

As shown in Fig. 12(a), the rivet portion 131 is formed at the upper flange portion 116, which protrudes downwards, and at the bottom side portion of the engaging hole 155 formed in the lower bracket 151 is formed the tilted-expanding portion 155a expanding gradually as going to the lower side, and the upper body 110 and the lower body 150 as described in the above are fixed to each other by expanding the bottom side portion of the rivet portion 131 using a caulking tool CT with a conic tip and fixing the upper bracket 111 and the lower bracket 151 integrally in a state of inserting the rivet portion 131 to the engaging hole 155 of the lower flange 156.

Sometimes, as shown in Fig. 12(b), the expanding portion 155b with a step may be formed at a lower end portion of the engaging hole 155 formed in the lower flange 156 of the lower bracket 151, and then the upper bracket 111 can be fixed to the lower bracket 151 integrally by bending the tip of the rivet portion 131 outwards with the caulking tool CT having a shape shown in Fig. 12(b).

Also sometimes, as shown in Fig. 12(c), the exterior diameter of the rivet portion 131 is formed a little larger than the interior diameter of the engaging hole 155, and then the upper bracket 111 can be fixed to the lower bracket 151 integrally by forcing the rivet portion 131 inserted into the engaging hole 155.

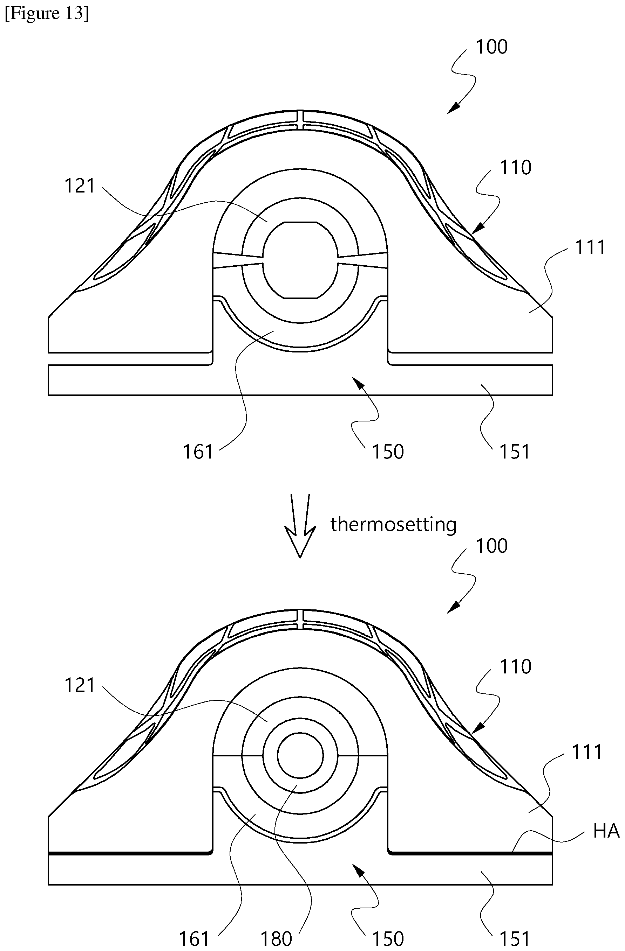

Fig. 13 is a diagram for describing another example of a coupling means of a bushing assembly according to the invention.

In a case that the upper bracket 111 and the lower bracket 151 are formed with synthetic resin, in a state of installing the lower body 150 and the upper body 110 at the exterior circumferential surface of the stabilizer bar 180 so as to face each other, the upper bracket 111 can be fixed to the lower bracket 151 integrally by heating the facing portions and pressing the upper body 110 toward the lower body 150 and forming the thermosetting portion HA.

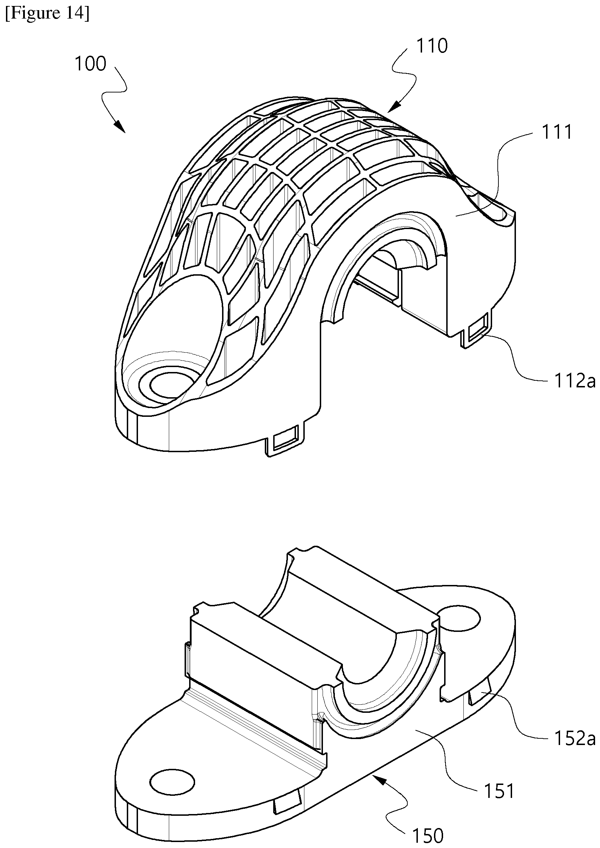

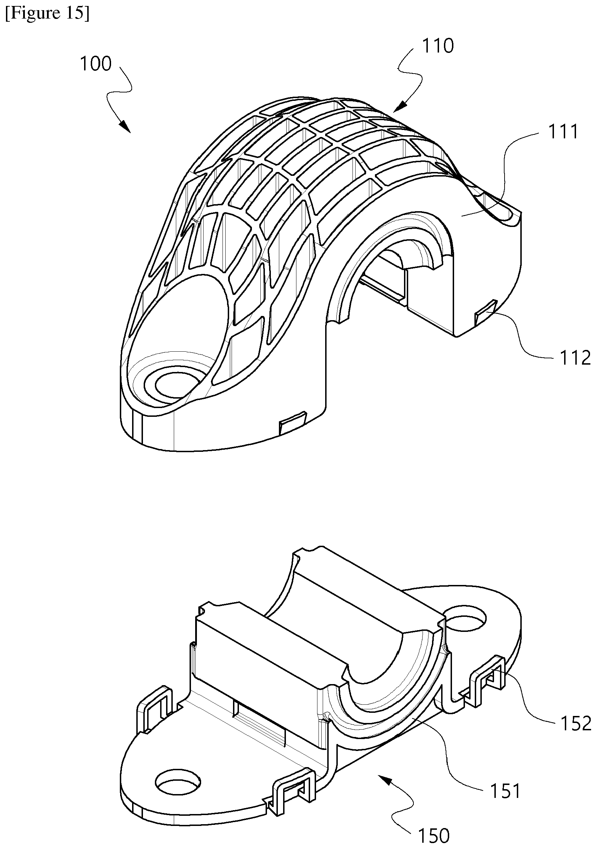

Fig. 14 and Fig. 15 are diagrams for showing still another examples of the coupling means of a bushing assembly according to the invention.

Sometimes, as shown in Fig. 14, the latching protrusion 152a is formed at one side surface of the lower bracket 151 and the latching step 112a is formed at a corresponding position of the upper bracket 111, so as to engage with each other.

In certain cases, as shown in Fig. 15, the latching protrusion 112 may be formed in the upper bracket 111 and the latching step 152 may be formed in a corresponding position of the lower bracket 151.

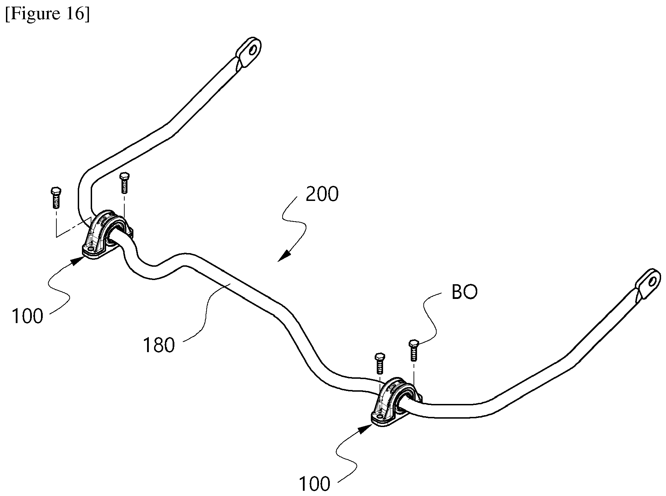

Fig. 16 is a perspective view of an embodiment of stabilizer bar assembly according to the invention. It will be described with reference to FIGS. 2 to 15 together.

A stabilizer bar assembly 200 according to the invention has a structure that the stabilizer bar bushing assembly 100 according to the invention is installed integrally on the exterior surface of the stabilizer bar 180.

Preferably, at least a pair of stabilizer bar bushing assemblies 100 is installed with an interval on the exterior surface of the stabilizer bar 180.

The upper body 110 and the lower body 150 can engage with each other through the coupling means 130 described in the above, it is preferable that the interior circumferential surface of the first concave groove 122 and the interior circumferential surface of the second concave groove 162 provided in the stabilizer bar bushing assembly 100 are not glued to the exterior circumferential surface of the stabilizer bar 180 by a glue, but sometimes they can be glued.

The stabilizer bar assembly 200 as in the above is fixed to the vehicle frame such as sub-frame and the like through screw member such as bolt BO and the like as shown in Fig. 1. Here, the screw member such as bolt BO and the like performs a function of coupling means for coupling the upper body 110 and the lower body 150 integrally through the upper bracket 111 and the lower bracket 151.

That is, the screw member such as bolt BO and the like can perform the functions of coupling means for coupling the upper bracket 111 and the lower bracket 151 along with other coupling means such as rivet portion, latching protrusion and latching step and synthetic resin members on facing portions of the upper bracket and the lower bracket and the like, and it is also preferable. However, sometimes, when there is no other coupling means, the bolt BO alone may serve as a coupling means.

The stabilizer bar bushing assembly 100 shown in Fig. 16 may be replaced by other stabilizer bar bushing assemblies according to the invention described in the above.

### [Industrial Application]

Possibly, the invention may be applied to making a stabilizer bar bushing assembly supporting stabilizer bar to the vehicle frame such as sub-frame and a stabilizer bar assembly of an integrated type with a bushing assembly using the same.

**[Reference Numerals]**

| | | | |
|---|---|---|---|
| 100: | stabilizer bar bushing assembly | 110: | upper body |
| 111: | upper bracket | 119: | groove |
| 121: | upper rubber | 122: | first concave groove |
| 124, 164: | rate plate | 130: | coupling means |
| 131: | rivet portion | 150: | lower body |
| 151: | lower bracket | 161: | lower rubber |
| 180: | stabilizer bar | 200: | stabilizer bar assembly |

## Claims

1. A stabilizer bar bushing assembly for supporting a stabilizer bar at the frame of vehicle comprising:
an upper body including an upper rubber formed with a first concave groove for enclosing a top side portion of outer circumferential surface of the stabilizer bar and an upper bracket enclosing an outer surface of the upper rubber opposite to the first concave groove and bonded integrally to an outer surface of the upper rubber;
a lower body including a lower rubber formed with a second concave groove for enclosing a bottom side portion of outer circumferential surface of the stabilizer bar and a lower bracket enclosing an outer circumferential surface of the lower rubber opposite to the second concave groove and bonded integrally to an outer surface of the lower rubber; and
a coupling means for coupling the upper bracket and the lower bracket together in a state of installing the upper body and the lower body on the stabilizer bar.

2. The stabilizer bar bushing assembly of Claim 1, wherein a rate plate for increasing a rigidity of the upper rubber and the lower rubber is inserted in the upper rubber and the lower rubber.

3. The stabilizer bar bushing assembly of Claim 1, wherein the upper bracket comprises an upper bracket body enclosing an outer surface of the upper rubber and formed with groove along an inner circumferential surface and an upper flange portion protruding toward both sides from both lower portions of the upper bracket body and formed with an engaging hole, and wherein the lower bracket comprises a lower bracket body enclosing an outer surface of the lower rubber and formed with groove along an inner circumferential surface and a lower flange portion protruding toward both sides correspondingly to the upper flange and formed with an engaging hole, and
wherein the coupling means includes a rivet portion, which protrudes at the engaging hole of one of the upper flange and the lower flange toward the engaging hole of the other flange, is inserted into the engaging hole formed in the other flange, and is fixed by deforming or forced inserting.

4. The stabilizer bar bushing assembly of Claim 1, wherein the upper bracket comprises an upper bracket body enclosing an outer surface of the upper rubber and formed with groove along an inner circumferential surface and an upper flange portion protruding toward both sides from both lower portions of the upper bracket body and formed with an engaging hole, and wherein the lower bracket comprises a lower bracket body enclosing an outer surface of the lower rubber and formed with groove along an inner circumferential surface and a lower flange portion protruding toward both sides correspondingly to the upper flange and formed with an engaging hole, and
wherein the coupling means includes a latching protrusion formed in one of the upper bracket and the lower bracket and a latching step formed in the other flange.

5. The stabilizer bar bushing assembly of Claim 1, wherein the upper bracket comprises an upper bracket body enclosing an outer surface of the upper rubber and formed with groove along an inner circumferential surface and an upper flange portion protruding toward both sides from both lower portions of the upper bracket body and formed with an engaging hole, and wherein the lower bracket comprises a lower bracket body enclosing an outer surface of the lower rubber and formed with groove along an inner circumferential surface and a lower flange portion protruding toward both sides correspondingly to the upper flange and formed with an engaging hole, and
wherein the coupling means includes facing surfaces of the upper bracket and the lower bracket, which are synthetic resin that are attachable together through thermosetting.

6. The stabilizer bar bushing assembly of any one of Claims 1 to 5, wherein the coupling means includes screw members for fixing the upper bracket and the lower bracket to the frame through the engaging holes.

7. A stabilizer bar assembly comprising a stabilizer bar bushing assembly according to any one of Claims 1 to 5, in which the stabilizer bar bushing assembly is installed integrally on an outer circumferential surface of a stabilizer bar.

8. The stabilizer bar assembly of Claim 7, wherein at least a pair of stabilizer bar bushing assemblies are installed on the outer circumferential surface of the stabilizer bar with an interval, and
wherein an inner circumferential surface of the first concave groove and an inner circumferential surface of the second concave groove provided in the stabilizer bar bushing assembly are bonded to an outer circumferential surface of the stabilizer bar integrally.
